# EUROPEAN PATENT SPECIFICATION

(11) **EP 3 646 947 B1**
(45) Date of publication and mention of the grant of the patent: **16.03.2022**
(21) Application number: 18822849.8
(22) Date of filing: 29.06.2018
(51) Int. Cl.: B01J 20/281, B01D 15/36, B01J 20/285, G01N 30/02, G01N 30/88, B01J 20/28, B01J 20/288, B01J 20/32, B01J 39/20, B01J 39/26, B01J 47/014, B01J 47/02

(54) **PACKING MATERIAL FOR LIQUID CHROMATOGRAPHY AND METHOD OF PRODUCTION THEREOF**
FÜLLSTOFF FÜR DIE FLÜSSIGCHROMATOGRAPHIE UND VERFAHREN ZU DESSEN HERSTELLUNG
MATÉRIAU DE GARNISSAGE POUR CHROMATOGRAPHIE EN PHASE LIQUIDE ET MÉTHODE DE PRODUCTION DE CELUI-CI

(30) Priority: 30.06.2017 JP 2017128844
(43) Date of publication of application: 06.05.2020
(73) Proprietor: Showa Denko K.K., Tokyo 105-8518 (JP)
(72) Inventor: NAKAJIMA, Naoya, Tokyo 105-8518 (JP); ODA, Natsuki, Tokyo 105-8518 (JP); KATO, Junya, Tokyo 105-8518 (JP)
(74) Representative: Strehl Schübel-Hopf & Partner
(86) International application number: PCT/JP2018/024858
(87) International publication number: WO 2019/004440

(56) References cited:
- EP-A1- 1 889 857
- EP-A1- 2 730 920
- EP-A1- 3 162 809
- WO-A1-2013/147255
- JP-A- 2012 241 037
- JP-A- 2017 104 828
- US-B2- 8 822 955
- ZHANG SHUHONG ET AL: "Capillary electrochromatography of proteins with polymer-based strong-cation-exchanger microspheres", JOURNAL OF CHROMATOGRAPHY A, vol. 965, no. 1, 2 August 2002 (2002-08-02), pages 83-92, XP085606303, ISSN: 0021-9673, DOI: 10.1016/S0021-9673(01)01544-8

## Description

### Technical Field

The present invention relates to a packing material for liquid chromatography having a sulfo group and a method of producing the packing material.

### Background Art

Liquid chromatography (hereinafter also referred to as "HPLC") is used in various fields as analysis methods for a wide variety of samples. In particular, cation exchange chromatography using a packing material having a sulfo group is used for analysis of a protein, an amino acid, or the like.

In the analysis of a protein by the cation exchange chromatography, non-specific adsorption of the protein to the packing material occurs in some cases. When the non-specific adsorption of the protein occurs, an accurate analysis result is not obtained, and besides, there arises a problem in that a column is degraded acceleratedly. Therefore, the use of a packing material which does not cause the non-specific adsorption is required.

The non-specific adsorption of the protein is mainly caused by hydrophobic interaction between the packing material and the protein. Therefore, as means for suppressing the hydrophobic interaction, highly hydrophilic particles are used as the packing material. For example, particles utilizing a (meth)acrylic acid ester-based polymer are widely known as the packing material.

In Patent Literature 1, there is disclosed a method of analyzing glycohemoglobin, including utilizing an ion exchanger in which a sulfo group is introduced into particles formed of a methacrylic acid ester-based polymer.

In Patent Literature 2, there is disclosed a packing material obtained by forming a hydrophilic polymer layer formed of methacrylic acid or the like on surfaces of divinylbenzene-based hydrophobic particles.

In Patent Literature 3, there is disclosed a packing material for liquid chromatography, including particles with a volume average particle size of 59 µm of a copolymer having a monomer unit derived from glycidyl methacrylate and glycerol monomethacryclate and a monomer unit derived from divinylbenzene. The particles each have a sulfo group bonded to a surface thereof.

In Non Patent Literature 1, there is disclosed an analysis example of a protein using a packing material obtained by acquiring particles by forming a methacrylic acid ester layer on a surface of a core formed of a divinylbenzene polymer generated through a polymerization reaction in acetonitrile, and further causing epichlorohydrin to react with the particles and then introducing a sulfo group into the particles.

### Citation List

### Patent Literature

[PTL 1] JP 03-255360 A
[PTL 2] JP 03-073848 A
[PTL 3] EP 3 162 809 A1

### Non Patent Literature

[NPL 1] Shuhong Zhang et al. Journal of Chromatography A, 965 (2002) 83-92

### Summary of Invention

### Technical Problem

In a column in which a protein is analyzed, the particles are required to be increased in hydrophilicity. When widely-used particles formed of a (meth)acrylic acid ester-based copolymer are used as the packing material, a hydrophilic monomer is selected and used as a raw material therefor. At this time, a cross-linkable (meth)acrylic acid ester used for cross-linking has a feature of having relatively high hydrophobicity, and hence in the packing material for protein analysis applications, the ratio of the cross-linkable (meth)acrylic acid ester monomer cannot be increased. As a result, the degree of cross-linking of the packing material cannot be increased, and the packing material does not have sufficient strength. In order to improve analysis performance, a reduction in particle diameter of the packing material is conceivable. However, when the particle diameter of the packing material is reduced under the state in which the strength of the packing material is not high, the packing material cannot withstand a pressure at the time of packing into a column to be deformed, with the result that satisfactory analysis cannot be performed. Therefore, there is a demand for a packing material having high hydrophilicity and having such high strength that the packing material can be used even when reduced in particle diameter.

In addition, in a method of forming a hydrophilic polymer layer on surfaces of hydrophobic particles as in Patent Literature 2, there arises a problem in that the number of operation steps is increased owing to the necessity for forming the hydrophilic layer, resulting in a reduction in productivity.

Thus, an object of the present invention is to provide a packing material for liquid chromatography which can be suitably used for analysis of a protein, an amino acid, or the like and can each be efficiently produced.

### Solution to Problem

The present invention is defined in the appended claims.

### Advantageous Effects of Invention

The packing material for liquid chromatography according to one embodiment of the present invention can each be suitably used for analysis of a protein, an amino acid, or the like. In particular, despite the use of an acrylic polymer as a base material, the packing material can be increased in strength while keeping high hydrophilicity, and hence can be reduced in particle diameter. As a result, analysis performance is improved.

In addition, the packing material can be efficiently produced.

### Brief Description of Drawings

FIG. 1 is a chromatogram obtained in Analysis Example 1.
FIG. 2 is a chromatogram obtained in Analysis Example 2.
FIG. 3 is a chromatogram obtained in Analysis Example 3.
FIG. 4 is a chromatogram obtained in Analysis Example 4.
FIG. 5 is a SEM photograph (magnification: 20,000 times) of packing material particles obtained in Example 1. Description of Embodiments

In a packing material for liquid chromatography according to one embodiment of the present invention, particles of a copolymer having a monomer unit derived from a (meth)acrylic acid ester and a monomer unit derived from divinylbenzene are used as a base material. The "(meth)acrylic acid ester" means an acrylic acid ester or a methacrylic acid ester.

In the copolymer in one embodiment of the present invention, divinylbenzene is used as a cross-linkable monomer. When divinylbenzene is used as the cross-linkable monomer, the resultant copolymer has high mechanical strength even when the ratio of a non-cross-linkable monomer is increased. Therefore, the particles of such copolymer have high strength even when reduced in particle diameter. Also when the particles are used as a packing material for a column, the particles can withstand an increase in pressure during analysis involved in a reduction in particle diameter. With this, the separation performance of the column can be improved.

Divinylbenzene serving as a monomer may be a mixture of a meta-positional isomer and a para-positional isomer.

Examples of the (meth)acrylic acid ester serving as a monomer for the copolymer include methyl (meth)acrylate, ethyl (meth)acrylate, 2-hydroxyethyl (meth)acrylate, 4-hydroxybutyl (meth)acrylate, glycerin di(meth)acrylate, and glycidyl (meth)acrylate. Those (meth)acrylic acid esters may be used alone or in combination thereof.

In order to increase the hydrophilicity of the base material or to introduce a sulfo group thereinto, the (meth)acrylic acid ester preferably includes a (meth)acrylic acid ester having a hydroxy group or a glycidyl group in a certain amount or more. While the amount is not completely determined, the amount is, for example, preferably 70 mass% or more with respect to the total of the (meth)acrylic acid ester. Examples of the (meth)acrylic acid ester having a hydroxy group or a glycidyl group include 2-hydroxyethyl (meth)acrylate, glycerin di(meth)acrylate, 4-hydroxybutyl (meth)acrylate, and glycidyl (meth)acrylate. Of those, glycidyl (meth)acrylate is more preferred because glycidyl (meth)acrylate can be suitably utilized for introduction of a sulfo group, and besides, can be converted into a structure having a hydroxy group through a ring-opening reaction. Glycidyl methacrylate is most preferred because of easy availability.

Ethylene glycol di(meth)acrylate, butyl (meth)acrylate, and hexyl (meth)acrylate, which are highly hydrophobic, may each be used in combination with the (meth)acrylic acid ester. The use amount thereof may fall within a range in which the hydrophilicity of the copolymer is not largely affected, and is specifically 10 mass% or less with respect to the total amount of the (meth)acrylic acid ester.

In the copolymer in one embodiment of the present invention, a ratio between the monomer unit derived from a (meth)acrylic acid ester and the monomer unit derived from divinylbenzene, monomer unit derived from a (meth)acrylic acid ester (in the case of using a plurality of kinds, the total amount thereof):monomer unit derived from divinylbenzene, is 70 mass% to 90 mass%:30 mass% to 10 mass%, preferably 75 mass% to 85 mass%:25 mass% to 15 mass%.

When the ratio of the monomer unit derived from a (meth)acrylic acid ester is less than 70 mass%, the hydrophobicity of the copolymer is increased, and non-specific adsorption of a protein is liable to occur. In addition, when a sulfo group is introduced into the monomer unit derived from a (meth)acrylic acid ester, it becomes difficult to efficiently introduce the sulfo group. Meanwhile, when the ratio of the monomer unit derived from a (meth)acrylic acid ester is more than 90 mass%, the strength of the copolymer particles is reduced. When such particles are used as a packing material for a column, the particles are deformed and the degradation of the column is liable to occur.

The copolymer may have any other monomer unit than the monomer unit derived from a (meth)acrylic acid ester and the monomer unit derived from divinylbenzene. The amount of the other monomer unit may fall within a range in which the hydrophilicity of the copolymer is not largely affected, and is, for example, 10 mass% or less of the copolymer. The amount of the other monomer unit is preferably 5 mass% or less, more preferably 3 mass% or less. A monomer for the other monomer unit is exemplified by styrene, ethylstyrene, methylstyrene, propylstyrene, methoxystyrene, α-methylstyrene, butadiene, and vinyl acetate.

The sizes of the copolymer particles are not particularly limited as long as the particles can be used as a packing material for a column for liquid chromatography, but in consideration of packing into the column and the separation performance of the column, the average particle diameter of the particles is preferably from 1 µm to 10 µm. When the average particle diameter is 10 µm or less, the separation performance for a compound is increased, and a satisfactory analysis result can be obtained. Meanwhile, when the average particle diameter is less than 1 µm, the packing of the particles is liable to be difficult owing to an increase in pressure in the column. In order to obtain a column having high separation performance, the average particle diameter of the particles is more preferably from 2 µm to 7 µm, most preferably from 2 µm to 3 µm.

The "average particle diameter" as used herein refers to an average particle diameter on a volume basis, and is measured as described below. First, an image of particles is taken with a particle size distribution measurement device so that the number of the particles is 2,000 or more, and based on the resultant two-dimensional image (preferably a still image) of the particles, the equivalent circle diameter of each particle (the diameter of a circle having the same area as the projected area of the image of the particle) is obtained. The volume of each particle is calculated from the equivalent circle diameter, and the particle diameter is obtained through averaging on the basis of the calculated volumes. At this time, the particles are each regarded as a sphere having the same diameter as the equivalent circle diameter. FPIA-3000 (manufactured by Sysmex Corporation) or the like may be used as the particle size distribution measurement device.

The copolymer particles each preferably have few fine pores on the surface. Specifically, the total pore volume of the particles measured by a gas adsorption method is preferably 0.05 cm³/g or less, more preferably 0.02 cm³/g or less with respect to the mass of the particles. When the particles have few fine pores, the particles are increased in strength. In addition, when HPLC analysis is performed by using a packing material including the particles as a base material, a compound, such as a protein, contained in a sample does not diffuse into the pores, and hence rapid analysis can be achieved.

The total pore volume may be measured by using Autosorb (trademark) iQ manufactured by Quantachrome Instruments as a device.

The packing material for liquid chromatography according to one embodiment of the present invention may be produced by obtaining the particles of the copolymer having a monomer unit derived from a (meth)acrylic acid ester and a monomer unit derived from divinylbenzene, and then introducing a sulfo group into the surfaces of the particles.

For copolymerization, any known oil-soluble radical polymerization initiator may be used. Examples of the polymerization initiator include 2,2'-azobisisobutyronitrile (hereinafter also referred to as AIBN), 2,2'-azobis(2,4-dimethylvaleronitrile) (hereinafter also referred to as V-65), dimethyl 2,2'-azobisisobutyrate, 2,2'-azobis(2-methylbutyronitrile), benzoyl peroxide, and lauroyl peroxide.

The use amount of the polymerization initiator may be appropriately determined depending on the kind and the amount of the monomers, but is generally from 0.1 part by mass to 5 parts by mass with respect to 100 parts by mass of the total amount of the monomers.

For example, a suspension polymerization method, an emulsion polymerization method, or a precipitation polymerization method may be utilized as a copolymerization method. In the precipitation polymerization, in which a polymerization reaction is performed in an appropriate organic solvent in which a monomer is dissolved but a polymerized product is not dissolved, particles having uniform particle diameters can be obtained. In the precipitation polymerization, however, aggregation of the particles may occur during the polymerization, and it is sometimes difficult to efficiently synthesize monodisperse particles. The suspension polymerization method and the emulsion polymerization method are preferred because the aggregation of the particles is less liable to occur, and the suspension polymerization method is more preferred. Out of such suspension polymerization methods, a SPG membrane suspension polymerization method using shirasu porous glass (SPG) membrane in which a pore diameter is controlled and internal pressure type micro kit MN-20 (manufactured by SPG Technology Co., Ltd.), a microchannel suspension polymerization method using a microchannel suspension device (manufactured by Eco Project Technologies Co., Ltd.), and the like are more preferred because particles having uniform particle diameters can be obtained.

In such polymerization method, a polymerization reaction may be performed, for example, through heating at from 60°C to 80°C for from 6 hours to 20 hours.

After the polymerization, the average particle diameter, uniformity, the content of fine particles, and the like may be adjusted through classification with a sieve or a classification device (e.g., a semi-free vortex classifier Aerofine Classifier AC, manufactured by Nisshin Engineering Inc.).

In order for the surfaces of the copolymer particles to be substantially free of fine pores, for example, the polymerization may be performed without adding a diluent.

In order to introduce a sulfo group into the surfaces of the resultant copolymer particles, for example, a sulfonating agent may be used. Examples of the sulfonating agent include: sulfonates, such as sodium 2-hydroxyethanesulfonate, sodium 3-hydroxypropanesulfonate, sodium 2-mercaptoethanesulfonate, sodium 3-mercaptopropanesulfonate, sodium 2-bromopropanesulfonate, and sodium 3-bromopropanesulfonate; and sultone compounds, such as 1,3-propanesultone, 1,3-butanesultone, 1,4-butanesultone, and 2,4-butanesultone. Of those, sodium 3-mercaptopropanesulfonate and 1,3-propanesultone are preferred because the reaction is easier, and 1,3-propanesultone is more preferred.

Those sulfonating agents are each bonded as a sulfo group through utilization of a reaction with a reactive functional group present on the surfaces of the copolymer particles. The reactive functional group is preferably a hydroxy group or an epoxy group, more preferably an epoxy group.

The sulfonating agent may directly react with the reactive functional group derived from the copolymer and present on the surfaces of the particles, or alternatively, the sulfonating agent may react with the reactive functional group after a spacer is caused to react with the reactive functional group, or when the reactive functional group is an epoxy group, the sulfonating agent may react with the reactive functional group after the epoxy group is subjected to a ring-opening reaction. It is preferred that the sulfonating agent directly react with the reactive functional group. A column using a packing material obtained through the direct reaction is improved in separation performance and is also excellent in production efficiency. In particular, in the analysis of glycated hemoglobin, a target protein is separated more satisfactorily when an epoxy group present on the surfaces of the copolymer particles is directly sulfonated than when the epoxy group is subjected to a ring-opening reaction and then sulfonated.

As described above, it is preferred that the resultant copolymer particles be used for a reaction with the sulfonating agent without being subjected to any other reaction including the ring-opening reaction of an epoxy group.

A reaction between the copolymer particles and the sulfonating agent may be performed by an appropriate method depending on the kind of the sulfonating agent. For example, when a sulfo group is introduced into a monomer unit derived from glycidyl methacrylate by using a sultone compound as a sulfonating agent, the reaction may be performed through use of a base. Examples of the base include: inorganic bases, such as sodium hydroxide, potassium hydroxide, and lithium hydroxide; amines, such as triethylamine and N,N-diisopropylethylamine; and organic bases, such as sodium methoxide, potassium methoxide, potassium t-butoxide, and 1,8-diazabicyclo[5.4.0]-7-undecene. Of those bases, sodium hydroxide, potassium hydroxide, and potassium t-butoxide are preferred, and sodium hydroxide and potassium hydroxide are more preferred. The inorganic base is used in an aqueous solution at any concentration.

Also when a sulfo group is introduced by using a sulfonate as a sulfonating agent, the reaction may be similarly performed through use of a base. When a sulfonate having a halogen group is used, a sulfo group is introduced through a halogen substitution reaction of a hydroxy group generated on the copolymer particles during the reaction, and when a sulfonate having a hydroxy group or a mercapto group is used, a sulfo group is introduced through a nucleophilic reaction accompanied by ring opening of an epoxy group on the copolymer particles.

Examples of the solvent used for a sulfonating reaction include water, dimethyl sulfoxide, dimethylacetamide, dimethylformamide, N-methylpyrrolidone, and an alcohol. Of those, an alcohol is preferred. From the viewpoints of reaction efficiency and reactivity, a secondary alcohol is more preferred. Examples of the secondary alcohol include 2-propanol, 2-butanol, 3-methyl-2-butanol, 2-pentanol, and 3-pentanol. Of those, 2-propanol is preferred from an economic viewpoint. When a sultone compound is used as a sulfonating agent, the secondary alcohol is particularly preferred also from the viewpoint of reaction efficiency.

When an acid catalyst is used for the reaction between the copolymer particles and the sulfonating agent, the reactivity is not sufficient. Particularly when a Lewis acid is used, the resultant packing material has low hydrophilicity and is not dispersed in an aqueous solution. Therefore, the packing material has problems such as being unable to be packed into a column, and hence does not exhibit functions as a packing material for separation of a protein.

The amount of a sulfo group to be bonded to the copolymer particles is preferably from 20 µmol/g to 300 µmol/g, more preferably from 40 µmol/g to 300 µmol/g. When the amount of a sulfo group to be bonded is less than 40 µmol/g, a retention time period in liquid chromatography analysis, such as HPLC, is shortened, and satisfactory separation cannot be performed. When the amount of a sulfo group to be bonded is 40 µmol/g or more, the packing material has satisfactory dispersibility in water, and a column satisfactory for the analysis of a protein can be obtained. In addition, the case in which the amount of a sulfo group to be bonded is more than 300 µmol/g is not preferred because a sample is retained excessively strongly, and an analysis time period tends to be prolonged.

The above-mentioned amount of a sulfo group may be measured by a method described below. Specifically, 10 mL of 0.5 M hydrochloric acid is added to 1 g of particles (sample) having been vacuum dried to allow the particles to be dispersed therein. The particles are filtered and then washed with water. With this, the particles are obtained in a washed state in which the sulfo group is converted into an acid form. Next, 10 mL of 0.5 M sodium hydroxide is added to the particles, and the particles are filtered under a state in which a container for collecting a filtrate is arranged, and then the particles are washed with 10 mL of water. A mixed liquid of the filtrate and the washing liquid is titrated with 0.1 M hydrochloric acid. The number of moles of hydrochloric acid required at this time is determined, and a value obtained by subtracting the number of moles of hydrochloric acid from the number of moles of sodium hydroxide (in this case, 5 mM) is used as the amount of a sulfo group.

In one embodiment of the present invention, the copolymer particles each desirably have on the surface thereof a structure represented by the following formula (1) in which a sulfo group is introduced: 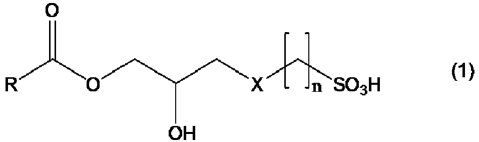 where R represents a partial structure derived from the surfaces of the copolymer particles, X represents an oxygen atom or a sulfur atom, and n represents an integer of from 2 to 4.

The structure is formed, for example, by performing copolymerization through use of glycidyl(meth)acrylate as at least one kind of the (meth)acrylic acid ester, followed by bonding the sulfonating agent as a sulfo group while subjecting an epoxy group to ring opening by the sulfonating agent, or followed by subjecting an epoxy group to ring opening to form a diol or a monool monothiol and then bonding the sulfonating agent as a sulfo group. In addition, the structure may be formed by performing copolymerization through use of a diol structure-containing ester or a monool monothiol-containing ester as at least one kind of the (meth)acrylic acid ester, and then bonding the sulfonating agent as a sulfo group.

The "surfaces of the particles" as used herein mean portions in which the copolymer particles serving as a solid can be brought into contact with a reagent in a reaction solvent, and generally exclude an inside of a solid. However, the sulfo group may be bonded to the inside of the solid.

The packing material for liquid chromatography according to one embodiment of the present invention is a packing material in which the specific structure having a sulfo group is bonded to the above-mentioned surfaces of the copolymer particles.

A column for liquid chromatography includes the above-mentioned packing material. The column is obtained by packing the above-mentioned packing material into the column by any known packing method, such as a slurry method. As a column for packing, a column made of PEEK or SUS as a material for a column body may be used. However, the column made of SUS has a risk of adsorption of a protein, and hence when a sample containing a protein is analyzed, the column made of PEEK is preferred. While a frit configured to prevent the packing material particles from flowing out is arranged in the column, a frit made of PEEK is also preferably used in order to suppress the adsorption.

When the column for liquid chromatography is used as a column for ion exchange chromatography, for example, various proteins and amino acids can be analyzed. In this case, for example, a buffer solution, such as a phosphate buffer, may be preferably utilized as an eluent.

### Examples

The present invention is specifically described below by way of Examples and Comparative Examples.

An average particle diameter measured in each of Examples and Comparative Examples was an average particle diameter on a volume basis, and was measured by the method described in the "Description of Embodiments" section.

### Example 1

### [Polymerization Step]

0.5 g (an amount corresponding to 1 mass% of the following monomer mixture) of lauroyl peroxide (manufactured by Nacalai Tesque, Inc.) serving as a polymerization initiator was added to 50 g of a monomer mixture of glycidyl methacrylate (manufactured by NOF Corporation) and divinylbenzene (manufactured by Nippon Steel & Sumikin Chemical Co., Ltd., purity: 99%) (glycidyl methacrylate:divinylbenzene=82:17 (mass ratio)) to obtain a mixture. The obtained mixture was turned into oil droplets by using 500 g of a 1% sodium alkyl diphenyl ether sulfonate aqueous solution as an aqueous phase with a microchannel suspension device (manufactured by Eco Project Technologies Co., Ltd.), and was further subjected a polymerization reaction. Thus, copolymer particles were obtained.

The average particle diameter of the obtained particles was 2.6 µm.

### [Modification Step]

24 g of 2-propanol and 3 g of 1,3-propanesultone (manufactured by Tokyo Chemical Industry Co., Ltd.) were added to 3 g of the copolymer particles, and the contents were heated to 50°C. 1.2 g of an 8 M potassium hydroxide aqueous solution was added thereto, and the contents were stirred for 6 hours and then filtered, and were sequentially washed with 0.5 M hydrochloric acid, water, a 0.5 M sodium hydroxide aqueous solution, and water. Thus, packing material particles 1 were obtained.

10 mL of 0.5 M hydrochloric acid was added to 1.0 g of the packing material particles 1 having been vacuum dried to allow the packing material particles 1 to be dispersed therein. The particles were filtered and then washed with water. With this, particles in each of which a sulfo group was converted into an acid form were obtained. 10 mL of 0.5 M sodium hydroxide was added to the particles, and the particles were filtered under a state in which a container for collecting a filtrate was arranged, and then the particles were washed with 10 mL of water. A mixed liquid of the filtrate and the washing liquid collected in the arranged container was titrated with 0.1 M hydrochloric acid. The amount of a sulfo group was determined from a difference between the number of moles (5 mM) of sodium hydroxide firstly used and the number of moles of hydrochloric acid required for the titration. As a result, the amount of a sulfo group with respect to the mass of the particles was 200 µmol/g.

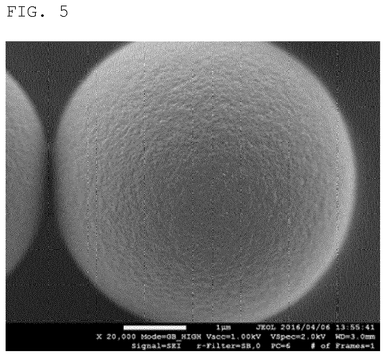

The packing material particles 1 were observed with a SEM. No pores were observed. The observation result is shown in FIG. 5. As a result of pore volume measurement based on gas adsorption (using Autosorb (trademark) iQ manufactured by Quantachrome Instruments as a use device), a value for the pore volume was 0.01 cm³/g and was significantly small.

The obtained packing material particles 1 were packed into a column made of PEEK measuring 4.6 mm in inner diameter×10 mm in length by a slurry method. Thus, a column 1 was obtained.

### Analysis Example 1

The column 1 produced in Example 1 was installed in a liquid chromatograph (Agilent (trademark) 1260 Infinity, manufactured by Agilent Technologies Inc.), and a glycated hemoglobin control sample (manufactured by ARKRAY, Inc.) was analyzed under the following analysis conditions.
Eluent: phosphate buffer solution (pH: 5.3)
Flow rate: 1.7 mL/min
Detector: UV-Vis detector (wavelength: 415 nm)
Temperature: 35°C

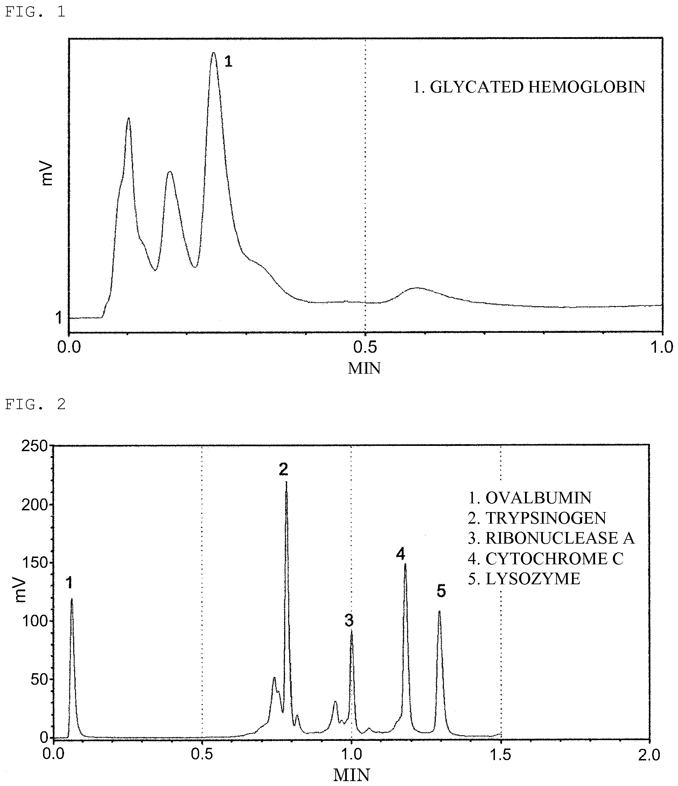

The obtained chromatogram is shown in FIG. 1. At this time, the height equivalent to a theoretical plate of a stable glycated hemoglobin peak was 33 µm.

### Analysis Example 2

The column 1 produced in Example 1 was installed in a liquid chromatograph (Agilent (trademark) 1260 Infinity, manufactured by Agilent Technologies Inc.), and proteins were analyzed under the following analysis conditions.
Eluent: (A) 20 mM 2-morpholinoethanesulfonic acid buffer solution (pH: 5.6)
   (B) (A) + 0.5 M Na₂SO₄
   linear gradient from 0 min to 2 min, from (A) to (B)
Flow rate: 1.7 mL/min
Detector: UV-Vis detector (wavelength: 280 nm)
Temperature: room temperature
Sample: 1. ovalbumin, 2. trypsinogen, 3. ribonuclease A, 4. cytochrome C, 5. lysozyme (manufactured by Sigma-Aldrich)

The obtained chromatogram is shown in FIG. 2. It is found that the five kinds of proteins were each satisfactorily separated in a short time period of 1.5 minutes.

### Comparative Example 1

0.1 g (an amount corresponding to 0.25 mass% of the following monomer mixture) of benzoyl peroxide serving as a polymerization initiator was dissolved in a monomer mixture of 30 g of diethylene glycol dimethacrylate (manufactured by NOF Corporation) and 10 g of 2-acrylamido-2-methylpropanesulfonic acid (manufactured by Tokyo Chemical Industry Co., Ltd.) (diethylene glycol dimethacrylate:2-acrylamido-2-methylpropanesulfonic acid=75:25 (mass ratio)) to obtain a mixture. The obtained mixture was added to a 5% polyvinyl alcohol (KURARAY POVAL PVA 224, manufactured by Kuraray Co., Ltd.) aqueous solution, and was subjected to polymerization at 80°C for 24 hours by a suspension polymerization method. The obtained particles were classified. Thus, packing material particles 2 having an average particle diameter of 6.5 µm were obtained.

The obtained packing material particles 2 were packed into a column made of SUS measuring 4.6 mm in inner diameter×20 mm in length by a slurry method. Thus, a column 2 was obtained.

### Analysis Example 3

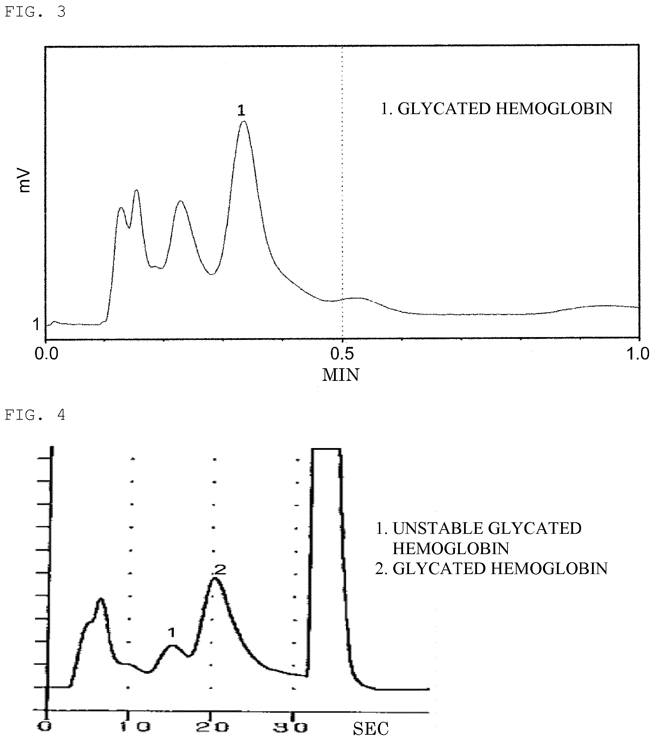

The analysis was performed under the same conditions as in Analysis Example 1 by using the column 2 obtained in Comparative Example 1. The obtained chromatogram is shown in FIG. 3. At this time, the height equivalent to a theoretical plate of a glycated hemoglobin peak was 81 µm.

The height equivalent to a theoretical plate was higher than in Analysis Example 1 because the average particle diameter was not able to be reduced. Further, a time period required for the analysis was 1.3 times as long as that in Analysis Example 1 because sufficient separation was not performed, and hence a longer column length was required.

### Comparative Example 2

### [Polymerization Step]

1.5 g (an amount corresponding to 1.88 mass% of the following monomer mixture) of V-65 serving as a polymerization initiator was dissolved in a monomer mixture of 56 g of glycidyl methacrylate and 24 g of ethylene glycol dimethacrylate (glycidyl methacrylate:ethylene glycol dimethacrylate=70:30 (mass ratio)) to obtain a mixture. The obtained mixture was added to an aqueous solution in which 4 g of polyvinyl alcohol and 4 g of sodium chloride were dissolved in 400 g of water, and was subjected to polymerization at 60°C for 10 minutes by a suspension polymerization method. The obtained particles were classified. Thus, copolymer particles having an average particle diameter of 2.5 µm were obtained.

### [Modification Step]

The copolymer particles were modified in the same manner as in Example 1. Thus, packing material particles 3 were obtained. The packing material particles 3 were packed into a column in the same manner as in Example 1, but a pressure was increased owing to deformation of the packing material particles in the course of the packing, and liquid delivery was stopped, with the result that the packing material particles were not able to be packed into the column.

### Comparative Example 3

24 g of tetrahydrofuran was added to 3 g of the copolymer particles obtained in Example 1 to allow the particles to be dispersed therein. 3 g of 1,3-propanesultone and 0.1 g of a boron trifluoride-diethyl ether complex were added thereto and a reaction was performed at 50°C for 6 hours. The reaction liquid was filtered, and sequentially washed with tetrahydrofuran, water, 0.5 M hydrochloric acid, water, a 0.5 M sodium hydroxide aqueous solution, and water. Thus, particles were obtained.

1 ml of 2-propanol and 10 mL of 0.5 M hydrochloric acid were added to 1.0 g of the obtained particles to allow the particles to be dispersed therein. The particles were filtered and then washed with water. With this, particles in each of which a sulfo group was converted into an acid form were obtained. 10 mL of 0.5 M sodium hydroxide was added to the particles, and the particles were filtered under a state in which a container for collecting a filtrate was arranged, and then the particles were washed with 10 mL of water. 70 mL of pure water was added to a mixed liquid of the filtrate and the washing liquid collected in the arranged container, and the resultant was titrated with 0.1 M hydrochloric acid. As a result of calculation, the amount of a sulfo group with respect to the mass of the particles was 38.2 mmol/g.

The obtained particles had properties of being not dispersed in water.

The reason why the particles are not dispersed in water is presumed as described below. Under the acid conditions, the amount of a sulfo group to be introduced by the reaction with the propanesultone is small. A column suitable for the analysis of a protein was not obtained because the particles are not dispersed in water.

### Example 2

3 g of the copolymer particles obtained in Example 1 were dispersed in 8 mL of water, and 8 mL of 0.5 M sulfuric acid was added thereto. A reaction was performed at 70°C for 6 hours to open an epoxy ring. It was confirmed that the epoxy ring was opened by the reaction with sulfuric acid by the fact that a peak derived from the epoxy group disappeared in FT-IR. The obtained particles were subjected to a modification step with 1,3-propanesultone by the same operation as in Example 1. Thus, 3 g of packing material particles 4 were obtained. The amount of a sulfo group with respect to the mass of the particles was 180 µmol/g.

The obtained packing material particles 4 were packed into a column made of PEEK measuring 4.6 mm in inner diameter×10 mm in length by a slurry method. Thus, a column 4 was obtained.

### Analysis Example 4

The measurement was performed in the same manner as in Analysis Example 1 except that the column 4 was used and a step gradient using (A) a phosphate buffer solution (pH: 5.3) for from 0 min to 0.5 min and (B) a phosphate buffer solution (pH: 8.5) for from 0.5 min to 1.0 min was adopted as eluent conditions. The obtained chromatogram is shown in FIG. 4. Glycated hemoglobin was satisfactorily separated in a short time period as in FIG. 1. In comparison, the chromatogram of FIG. 1 slightly excelled with regard to the separation of glycated hemoglobin and unstable glycated hemoglobin.

## Claims

1. A packing material for liquid chromatography, including particles of a copolymer having a monomer unit derived from a (meth)acrylic acid ester and a monomer unit derived from divinylbenzene, wherein a ratio between the monomer unit derived from a (meth)acrylic acid ester and the monomer unit derived from divinylbenzene is 70 mass% to 90 mass%:30 mass% to 10 mass%, wherein the particles have an average particle diameter on a volume basis of from 1 µm to 10 µm , wherein the particles each have a sulfo group bonded to a surface thereof and a structure in which the sulfo group is bonded includes a structure represented by the formula (1): 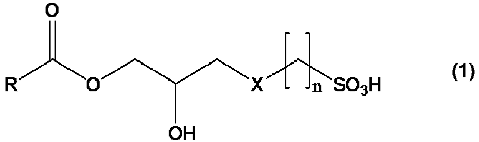 where R represents a partial structure derived from the surfaces of the copolymer particles, X represents an oxygen atom or a sulfur atom, and n represents an integer of from 2 to 4, and wherein the particles each include the sulfo group at from 40 µmol/g to 300 µmol/g, wherein the average particle diameter on volume basis is measured by taking a two-dimensional image of 2000 or more of the particles, obtaining the equivalent circle diameter of each particle on the image, calculating the volume of each particle from said equivalent circle diameter, where each particle is regarded as a sphere having the same diameter as the said equivalent circle diameter, and hence obtaining the average particle diameter through averaging on the basis of the calculated volumes.

2. A method of producing a packing material for liquid chromatography, including particles of a copolymer having a monomer unit derived from a (meth)acrylic acid ester and a monomer unit derived from divinylbenzene, wherein a ratio between the monomer unit derived from a (meth)acrylic acid ester including glycidyl methacrylate and the monomer unit derived from divinylbenzene is 70 mass% to 90 mass%:30 mass% to 10 mass%, wherein the average particle diameter on the volume basis of the particles is from 1 µm to 10 µm, wherein the average particle diameter on volume basis is measured by taking a two-dimensional image of 2000 or more of the particles, obtaining the equivalent circle diameter of each particle on the image, calculating the volume of each particle from said equivalent circle diameter, where each particle is regarded as a sphere having the same diameter as the said equivalent circle diameter, and hence obtaining the average particle diameter through averaging on the basis of the calculated volumes. wherein the particles each have a sulfo group bonded to a surface thereof and a structure in which the sulfo group is bonded includes a structure represented by the formula (1):
the method including the steps of: copolymerizing a monomer mixture containing the (meth)acrylic acid ester and the divinylbenzene through suspension polymerization to obtain copolymer particles; and causing the copolymer particles and a sulfonating agent to react with each other in a solvent containing a secondary alcohol in the presence of a base to obtain the particles having the structure represented by the formula (1). 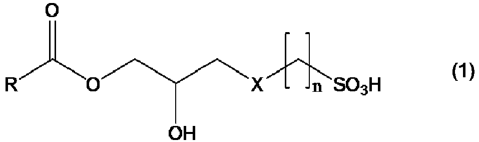 where R represents a partial structure derived from the surfaces of the copolymer particles, X represents an oxygen atom or a sulfur atom, and n represents an integer of from 2 to 4, and wherein the particles each include the sulfo group at from 40 µmol/g to 300 µmol/g.

3. The method of producing the packing material according to claim 2, wherein the sulfonating agent is a sultone or a sulfonate, and wherein the base is at least one selected from the group consisting of sodium hydroxide, potassium hydroxide, and potassium t-butoxide.

4. The method of producing the packing material according to any one of claims 2 or 3, wherein the secondary alcohol is at least one selected from the group consisting of 2-propanol, 2-butanol, 3-methyl-2-butanol, 2-pentanol, and 3-pentanol.

5. The method of producing the packing material according to claims 2 or 4, wherein the step of causing the copolymer particles and a sulfonating agent to react with each other is performed after the step of obtaining the copolymer particles without subjecting the obtained particles to another chemical reaction.

6. The method of producing the packing material according to claim 2 or 5, wherein the (meth)acrylic acid ester is glycidyl methacrylate, the sulfonating agent is propanesultone, and the secondary alcohol is 2-propanol.

## Patentansprüche

1. Füllmaterial für die Flüssigkeitschromatographie, das Teilchen eines Copolymers mit einer von einem (Meth)acrylsäureester abgeleiteten Monomereinheit und einer von Divinylbenzol abgeleiteten Monomereinheit einschließt, wobei das Verhältnis zwischen der von einem (Meth)acrylsäureester abgeleiteten Monomereinheit und der von Divinylbenzol abgeleiteten Monomereinheit 70 Massen-% bis 90 Massen-%:30 Massen-% bis 10 Massen-% beträgt, wobei die Teilchen einen durchschnittlichen Teilchendurchmesser auf Volumenbasis von 1 µm bis 10 µm aufweisen, wobei die Teilchen jeweils eine an eine Oberfläche davon gebundene Sulfogruppe aufweisen und eine Struktur, in der die Sulfogruppe gebunden ist, eine Struktur der Formel (1) einschließt: 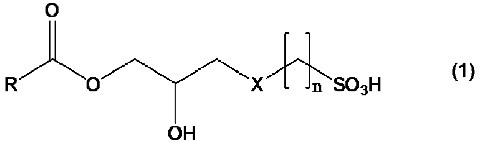 wobei R eine von den Oberflächen der Copolymerteilchen abgeleitete Teilstruktur darstellt, X ein Sauerstoffatom oder ein Schwefelatom darstellt und n eine ganze Zahl von 2 bis 4 darstellt, und wobei die Teilchen jeweils die Sulfogruppe in einer Menge von 40 µmol/g bis 300 µmol/g enthalten, wobei der durchschnittliche Teilchendurchmesser auf Volumenbasis gemessen wird, indem ein zweidimensionales Bild von 2000 oder mehr der Teilchen aufgenommen wird, der äquivalente Kreisdurchmessers jedes Teilchens auf dem Bild ermittelt wird, das Volumen jedes Teilchens aus dem äquivalenten Kreisdurchmesser berechnet wird, wobei jedes Teilchen als eine Kugel mit dem gleichen Durchmesser wie der äquivalente Kreisdurchmesser betrachtet wird, und somit der durchschnittliche Teilchendurchmesser durch Mittelwertbildung auf der Grundlage der berechneten Volumina ermittelt wird.

2. Verfahren zur Herstellung eines Füllmaterials für die Flüssigkeitschromatographie, das Teilchen eines Copolymers mit einer von einem (Meth)acrylsäureester ableiteten Monomereinheit und einer von Divinylbenzol ableiteten Monomereinheit einschließt, wobei das Verhältnis zwischen der Monomereinheit, die sich von einem Glycidylmethacrylat einschließenden (Meth)acrylsäureester ableitet, und der von Divinylbenzol ableitet Monomereinheit, 70 Massen-% bis 90 Massen-%:30 Massen-% bis 10 Massen-% beträgt, wobei der durchschnittliche Partikeldurchmesser auf Volumenbasis der Partikel 1 µm bis 10 µm beträgt, wobei der durchschnittliche Partikeldurchmesser auf Volumenbasis gemessen wird, indem ein zweidimensionales Bild von 2000 oder mehr der Partikel aufgenommen wird, der äquivalente Kreisdurchmesser jedes Partikels auf dem Bild erhalten wird, das Volumen jedes Partikels aus dem äquivalenten Kreisdurchmesser berechnet wird, wobei jedes Partikel als eine Kugel mit dem gleichen Durchmesser wie dem äquivalenten Kreisdurchmesser betrachtet wird, und somit der durchschnittliche Partikeldurchmesser durch Mittelwertbildung auf der Basis der berechneten Volumina erhalten wird, wobei die Teilchen jeweils eine an eine ihrer Oberflächen gebundene Sulfogruppe aufweisen und eine Struktur, in der die Sulfogruppe gebunden ist, eine Struktur der Formel (1) einschließt:
wobei das Verfahren die Schritte einschließt: Copolymerisieren einer den (Meth)acrylsäureester und das Divinylbenzol enthaltenden Monomermischung durch Suspensionspolymerisation, um Copolymerteilchen zu erhalten; und Bewirken, dass die Copolymerteilchen und ein Sulfonierungsmittel miteinander in einem das einen sekundären Alkohol enthaltenden Lösungsmittel in Gegenwart einer Base reagieren, um die Teilchen der Struktur der Formel (1) zu erhalten. 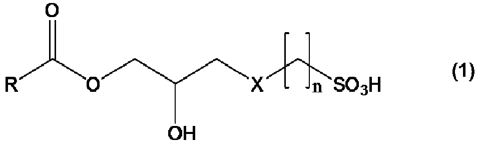 wobei R eine von den Oberflächen der Copolymerteilchen abgeleitete Teilstruktur darstellt, X ein Sauerstoffatom oder ein Schwefelatom darstellt und n eine ganze Zahl von 2 bis 4 darstellt, und wobei die Teilchen jeweils die Sulfogruppe in einer Menge von 40 µmol/g bis 300 µmol/g enthalten.

3. Verfahren zur Herstellung des Verpackungsmaterials nach Anspruch 2, wobei das Sulfonierungsmittel ein Sulton oder ein Sulfonat ist und wobei die Base mindestens eine ist, die aus der Gruppe ausgewählt ist, die aus Natriumhydroxid, Kaliumhydroxid und Kalium-t-butoxid besteht.

4. Verfahren zur Herstellung des Verpackungsmaterials nach Anspruch 2 oder 3, wobei der sekundäre Alkohol mindestens einer ist, der aus der Gruppe ausgewählt ist, die aus 2-Propanol, 2-Butanol, 3-Methyl-2-Butanol, 2-Pentanol und 3-Pentanol besteht.

5. Verfahren zur Herstellung des Verpackungsmaterials nach Anspruch 2 oder 4, wobei der Schritt, die Copolymerteilchen und ein Sulfonierungsmittel miteinander reagieren zu lassen, nach dem Schritt der Gewinnung der Copolymerteilchen durchgeführt wird, ohne die erhaltenen Teilchen einer weiteren chemischen Reaktion zu unterziehen.

6. Verfahren zur Herstellung des Verpackungsmaterials nach Anspruch 2 oder 5, wobei der (Meth)acrylsäureester Glycidylmethacrylat ist, das Sulfonierungsmittel Propansulton ist und der sekundäre Alkohol 2-Propanol ist.

## Revendications

1. Matériau de garnissage pour chromatographie en phase liquide, comportant des particules d'un copolymère ayant un motif monomère dérivé d'un ester d'acide (méth)acrylique et un motif monomère dérivé du divinylbenzène, dans lequel un rapport entre le motif monomère dérivé d'un ester d'acide (méth)acrylique et le motif monomère dérivé du divinylbenzène est de 70 % en masse à 90 % en masse:30 % en masse à 10 % en masse, dans lequel les particules ont un diamètre moyen de particule sur une base volumique de 1 µm à 10 µm, dans lequel les particules ont chacune un groupe sulfo lié à une surface de celles-ci et une structure dans laquelle le groupe sulfo est lié comporte une structure représentée par la formule (1) : 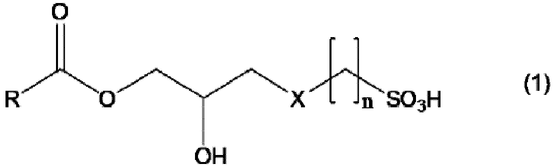 où R représente une structure partielle dérivée des surfaces des particules de copolymère, X représente un atome d'oxygène ou un atome de soufre, et n représente un nombre entier de 2 à 4, et dans lequel les particules comportent chacune le groupe sulfo à raison de 40 µmol/g à 300 µmol/g, dans lequel le diamètre moyen de particule sur une base volumique est mesuré en prenant une image bidimensionnelle de 2 000 ou plus des particules, en obtenant le diamètre de cercle équivalent de chaque particule sur l'image, en calculant le volume de chaque particule à partir dudit diamètre de cercle équivalent, où chaque particule est considérée comme une sphère ayant le même diamètre que ledit diamètre de cercle équivalent, et en obtenant ainsi le diamètre moyen de particule par calcul de la moyenne sur la base des volumes calculés.

2. Procédé de production d'un matériau de garnissage pour chromatographie en phase liquide, comportant des particules d'un copolymère ayant un motif monomère dérivé d'un ester d'acide (méth)acrylique et un motif monomère dérivé du divinylbenzène, dans lequel un rapport entre le motif monomère dérivé d'un ester d'acide (méth)acrylique comportant du méthacrylate de glycidyle et le motif monomère dérivé du divinylbenzène est de 70 % en masse à 90 % en masse:30 % en masse à 10 % en masse, dans lequel le diamètre moyen de particule sur la base volumique des particules est de 1 µm à 10 µm, dans lequel le diamètre moyen de particule sur une base volumique est mesuré en prenant une image bidimensionnelle de 2 000 ou plus des particules, en obtenant le diamètre de cercle équivalent de chaque particule sur l'image, en calculant le volume de chaque particule à partir dudit diamètre de cercle équivalent, où chaque particule est considérée comme une sphère ayant le même diamètre que ledit diamètre de cercle équivalent, et en obtenant ainsi le diamètre moyen de particule par calcul de la moyenne sur la base des volumes calculés, dans lequel les particules ont chacune un groupe sulfo lié à une surface de celles-ci et une structure dans laquelle le groupe sulfo est lié comporte une structure représentée par la formule (1) :
le procédé comportant les étapes de: copolymérisation d'un mélange de monomères contenant l'ester d'acide (méth)acrylique et le divinylbenzène par polymérisation en suspension pour obtenir des particules de copolymère ; et le fait d'amener les particules de copolymère et un agent de sulfonation à réagir les uns avec les autres dans un solvant contenant un alcool secondaire en présence d'une base pour obtenir les particules ayant la structure représentée par la formule (1). 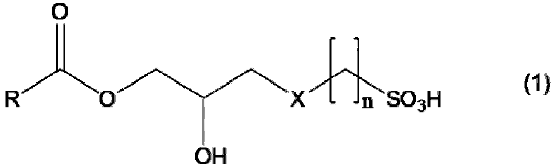 où R représente une structure partielle dérivée des surfaces des particules de copolymère, X représente un atome d'oxygène ou un atome de soufre, et n représente un nombre entier de 2 à 4, et dans lequel les particules comportent chacune le groupe sulfo à raison de 40 µmol/g à 300 µmol/g.

3. Procédé de production du matériau de garnissage selon la revendication 2, dans lequel l'agent de sulfonation est une sultone ou un sulfonate, et dans lequel la base est au moins une choisie dans le groupe constitué de l'hydroxyde de sodium, de l'hydroxyde de potassium et du t-butoxyde de potassium.

4. Procédé de production du matériau de garnissage selon l'une quelconque des revendications 2 ou 3, dans lequel l'alcool secondaire est au moins un choisi dans le groupe constitué du 2-propanol, du 2-butanol, du 3-méthyl-2-butanol, du 2-pentanol et du 3-pentanol.

5. Procédé de production du matériau de garnissage selon les revendications 2 ou 4, dans lequel l'étape consistant à amener les particules de copolymère et un agent de sulfonation à réagir les uns avec les autres est effectuée après l'étape d'obtention des particules de copolymère sans soumission des particules obtenues à une autre réaction chimique.

6. Procédé de production du matériau de garnissage selon la revendication 2 ou 5, dans lequel l'ester d'acide (méth)acrylique est du méthacrylate de glycidyle, l'agent de sulfonation est de la propanesultone, et l'alcool secondaire est du 2-propanol.
